(19) Europäisches Patentamt
European Patent Office
Office européen des brevets

(11) **EP 1 950 881 A1**

(12) **EUROPEAN PATENT APPLICATION**
published in accordance with Art. 158(3) EPC

(43) Date of publication:
**30.07.2008 Bulletin 2008/31**

(51) Int Cl.:
*H02P 9/04* (2006.01)    *F25B 11/02* (2006.01)
*H02P 9/10* (2006.01)

(21) Application number: **06812042.7**

(22) Date of filing: **19.10.2006**

(86) International application number:
**PCT/JP2006/320864**

(87) International publication number:
**WO 2007/049506 (03.05.2007 Gazette 2007/18)**

(84) Designated Contracting States:
**DE FR GB**

(30) Priority: **26.10.2005 JP 2005310749**

(71) Applicant: **Matsushita Electric Industrial Co., Ltd.**
**Kadoma-shi**
**Osaka 571-8501 (JP)**

(72) Inventors:
• **MATSUI, Keizo**
**c/o Matsushita Electric Ind. Co., Ltd., I.P.R.O.C.**
**Chuo-ku, Osaka, 540-6207 (JP)**

• **MATSUYAMA, Tetsuya**
**c/o Matsushita Electric Ind. Co., Ltd., I.P.R.O.C.**
**Chuo-ku, Osaka, 540-6207 (JP)**

(74) Representative: **Eisenführ, Speiser & Partner**
**Patentanwälte Rechtsanwälte**
**Postfach 10 60 78**
**28060 Bremen (DE)**

(54) **HEAT PUMP APPLICATION APPARATUS EMPLOYING EXPANSION DEVICE**

(57)    A heat pump apparatus includes a compressor, a motor, an expander, a generator, and a variable-speed converter. The variable-speed converter is connected to the generator and converts alternating current generated by the generator into direct current. The variable-speed converter continues to control driving of the generator after an operation stop trigger occurs for lowering the speed of the motor and stopping the operation of the heat pump apparatus at least until a value of current flowing through the generator becomes equal to or less than a predetermined value. The variable-speed converter stops the working of the generator after the value of current flowing through the generator becomes equal to or less than the predetermined value.

FIG. 1

**Description**

BACKGROUND OF THE INVENTION

Field of the Invention

The present invention relates to a heat pump apparatus using an expander.

Related Art

A conventional heat pump apparatus that is applied to air conditioners and water heaters decompresses and expands refrigerant with the use of an expansion valve. In recent years, there has been an attempt to recover the mechanical power with the use of an expander when the refrigerant expands from high pressure to low pressure, and at the same time to improve the energy efficiency of the vapor compression cycle utilizing that mechanical power. With the mechanical power obtained by the expander, a generator may be driven to generate electric power, and the electric power can then be supplied to a motor that drives the compressor, so that power consumption can be reduced.

The heat pump apparatus that uses an expansion valve and the heat pump apparatus that uses an expander require different operation stopping procedures. The operation stopping procedure for the heat pump apparatus using an expansion valve is quite simple, and it usually requires only stopping the driving of the compressor. In other words, it requires no control process. The state in which the refrigerant circuit is divided into a high-pressure side and a low-pressure side remains for a certain time, but this does not develop into a serious problem. Moreover, by fully opening the expansion valve when stopping the operation, the apparatus can make the pressure in the entire refrigerant circuit uniform quickly.

In contrast, the heat pump apparatus using an expander is incapable of making the pressure in the entire refrigerant circuit uniform instantly when stopping the operation. Since the high-pressure refrigerant remains at an intake side of the expander and the low-pressure refrigerant remains at a discharge side of the expander, the expander is kept under a large pressure difference between the high-pressure refrigerant and the low-pressure refrigerant. As a result, in the case of a rotary type expander, for example, its piston may undergo a free rotation in the cylinder at a high speed due to the remaining pressure difference, which may consequently cause the expander to break.

In the field of compressor, the problem associated with the remaining pressure difference when stopping the operation is known to a certain extent. The case of a compressor, however, is different from the case of an expander in that the compressor undergoes a force that induces a reverse rotation because the discharge side becomes a high pressure while the intake side becomes a low pressure. A proposal has been made to prevent the reverse rotation by, for example, providing a resistance element at a lower end of a shaft (JP 9-158851A). Fig. 8 shows a cross-sectional view of the conventional scroll-type fluid machine disclosed in JP 9-158851A.

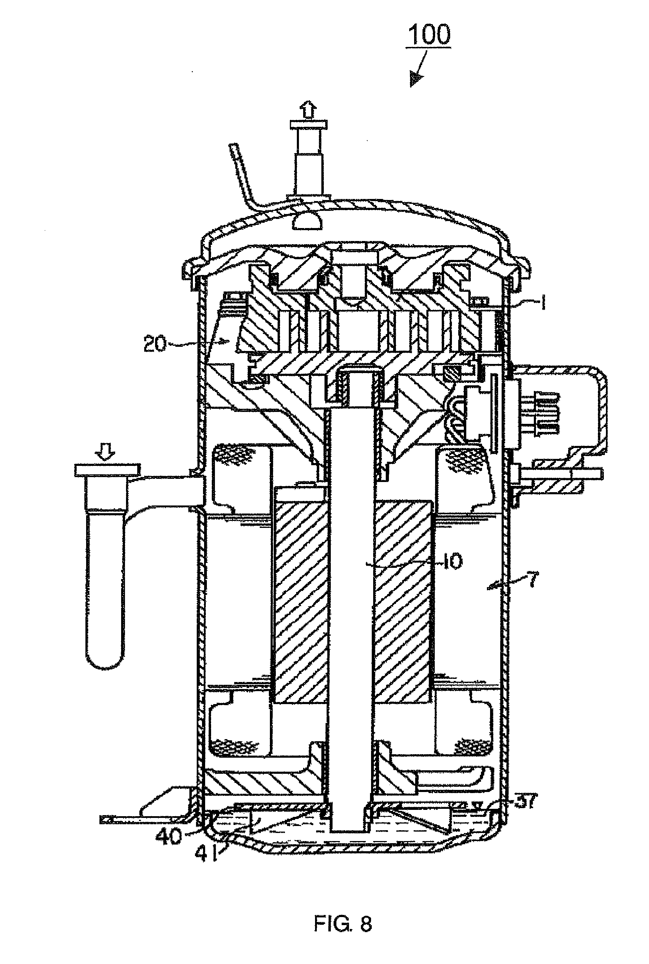

The scroll-type fluid machine 100 shown in Fig. 8 includes a closed shell 1, a compressor unit 20, and a motor unit 7. The bottom part of the closed shell 1 stores lubricating oil 37 for lubricating sliding parts of the compressor unit 20. A rotating disk 40 is attached to a shaft 10, and the rotating disk 40 is provided with slanted blades 41 serving as the resistance element in such a manner that they are submerged in the lubricating oil 37.

Here, when the scroll-type fluid machine 100 stops its operation, even if the shaft 10 attempts to rotate in the reverse direction because of the pressure difference remaining in the compressor unit 20, the slanted blades 41 of the rotating disk 40 receive resistance from the lubricating oil 37, preventing the reverse rotation.

However, provision of the resistance element such as the slanted blades 41 necessitates extra driving power for the operation because the slanted blades 41 rotate in the lubricating oil 37 during the normal operation, causing resistance. First of all, in the case of the expander, the rotation in the normal direction is accelerated by the remaining pressure difference, so it is impossible to directly apply the techniques for preventing the reverse rotation of a compressor to the expander.

SUMMARY OF THE INVENTION

Accordingly, it is an object of the present invention to provide a highly reliable heat pump apparatus using an expander, which is capable of preventing the expander from breakage when stopping the operation and requires no extra driving power.

The present invention provides a heat pump apparatus comprising:

a compressor for compressing a working fluid;
a motor for driving the compressor;
an expander for expanding the working fluid;

a generator connected to the expander, for converting mechanical power into electric power, the mechanical power being recovered by the expander when the working fluid expands; and

a variable-speed converter connected to the generator, for converting alternating current generated by the generator into direct current, wherein the variable-speed converter continues to control driving of the generator after an operation stop trigger occurs for lowering rotational speed of the motor and stopping the operation of the heat pump apparatus at least until a value of current flowing through the generator becomes equal to or less than a predetermined value, and stops the working of the generator after the value of current flowing through the generator becomes equal to or less than the predetermined value.

According to the invention as described above, the variable-speed converter continues to control the driving (to control the speed) of the generator after the operation stop trigger occurs at least until the current value generator becomes equal to or less than the predetermined value. Then, it waits until the value of current flowing through the generator becomes equal to or less than the predetermined value, in other words, until the high pressure/low pressure difference of the working fluid in the heat pump cycle reduces sufficiently, and then stops the working of the generator. That is, it does not allow the expander to freely rotate during the period in which the value of current flowing through the generator is large. Meanwhile, after the operation stop trigger occurs, the speed of the motor is reduced; therefore, the high pressure/low pressure difference of the working fluid in the heat pump cycle reduces gradually, and accordingly the value of current flowing through the generator decreases gradually Then, after the value of current flowing through the generator becomes sufficiently small, the working of the generator is stopped. In this way, the expander, which revolves in synchronization with the generator, does not revolve at such a high speed that the constituting components may break. Moreover, since the control is performed by an electric circuit and no extra resistance element such as the slanted blades is needed, no additional driving power is required during the normal operation. Thus, a highly reliable heat pump apparatus is made available.

In another aspect, the present invention provides a heat pump apparatus comprising:

an expander for expanding a working fluid;

a generator connected to the expander, for converting mechanical power into electric power, the mechanical power being recovered by the expander when the working fluid expands;

a variable-speed converter connected to the generator, for converting alternating current generated by the generator into direct current; and

a protection circuit connected to the variable-speed converter, wherein the protection circuit is supplied with a control signal while the expander is being driven, and consumes or stores regenerative power generated by the generator when the supply of the control signal stops.

According to the present invention as described above, even if the driving of the motor stops abnormally such as in the event of power failure, the protection circuit consumes or stores the regenerative power in place of the motor. Therefore, the voltage of the power line does not excessively rise, and the electric circuits do not break.

BRIEF DESCRIPTION OF THE DRAWINGS

Fig. 1 is a block diagram illustrating a heat pump apparatus using an expander, according to Embodiment 1 of the present invention;

Fig. 2 is a detailed view illustrating a portion of Fig. 1;

Fig. 3 is a detailed circuit diagram illustrating a variable-speed converter;

Fig. 4A is a transition diagram illustrating speed of the expander, generator's current, and speed of the compressor when the heat pump apparatus stops the operation;

Fig. 4B is an another transition diagram illustrating speed of the expander, generator's current, and speed of the compressor when the heat pump apparatus stops the operation;

Fig. 5 is a general flowchart illustrating a stop process of the heat pump apparatus;

Fig. 6 is a detailed flowchart illustrating the stop process of the heat pump apparatus;

Fig. 7 is a partial block diagram illustrating a heat pump apparatus according to Embodiment 2 of the present invention; and

Fig. 8 is a cross-sectional view illustrating a conventional scroll-type fluid machine.

DETAILED DESCRIPTION OF THE INVENTION

Hereinbelow, preferred embodiments of the present invention will be described with reference to the drawings.

(Embodiment 1)

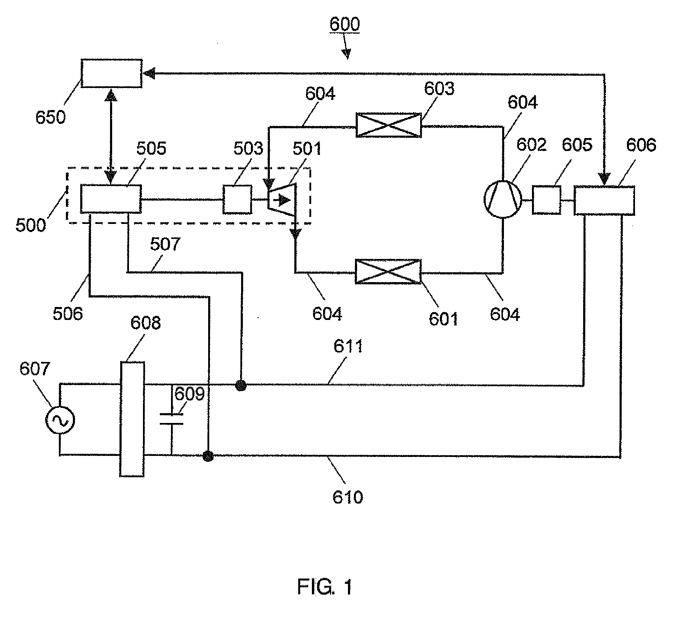

Fig. 1 is a block diagram of a heat pump apparatus using an expander, according to Embodiment 1 of the present invention. A heat pump apparatus 600 includes an expander 501 for expanding refrigerant serving as a working fluid, an evaporator 601 for evaporating the refrigerant expanded by the expander 501, a compressor 602 for compressing the refrigerant that has evaporated, a radiator 603 at which the refrigerant compressed by the compressor 602 radiates its heat, and a refrigerant pipes 604 for connecting these components in that order. The expander 501, the evaporator 601, the compressor 602, the radiator 603, and the refrigerant pipes 604 together form a closed circuit in which the refrigerant circulates. Application examples of the heat pump apparatus 600 include air conditioners and water heaters. In the case of the air conditioner, one of the evaporator 601 and the radiator 603 serves as an indoor heat exchanger while the other serves as an outdoor heat exchanger. In the case of the water heater, the evaporator 601 serves as an outdoor heat exchanger while the radiator 603 serves as a water heat exchanger.

Examples of the type of the refrigerant include, but are not particularly limited to, carbon dioxide and hydrofluorocarbon (HFC). Carbon dioxide allows the high pressure/low pressure difference in the refrigeration cycle to be greater than other refrigerants, so application of the present invention is particularly effective for the heat pump apparatus that uses carbon dioxide as the refrigerant.

The heat pump apparatus 600 is further provided with a main control unit 650. The main control unit 650 contains electrical components such as a microcomputer, an input/output circuit, and an A/D converter, and it manages the overall operations of the heat pump apparatus 600.

The generator 503 is mechanically connected to the expander 501, and a variable-speed converter 505 (a variable-frequency converter) is electrically connected to the generator 503. The expander 501, the generator 503, and the variable-speed converter 505 together form a mechanical power recovery device 500 that recovers the expansion force of the refrigerant and converts it into electric power. The variable-speed converter 505 is communicatively connected to the main control unit 650.

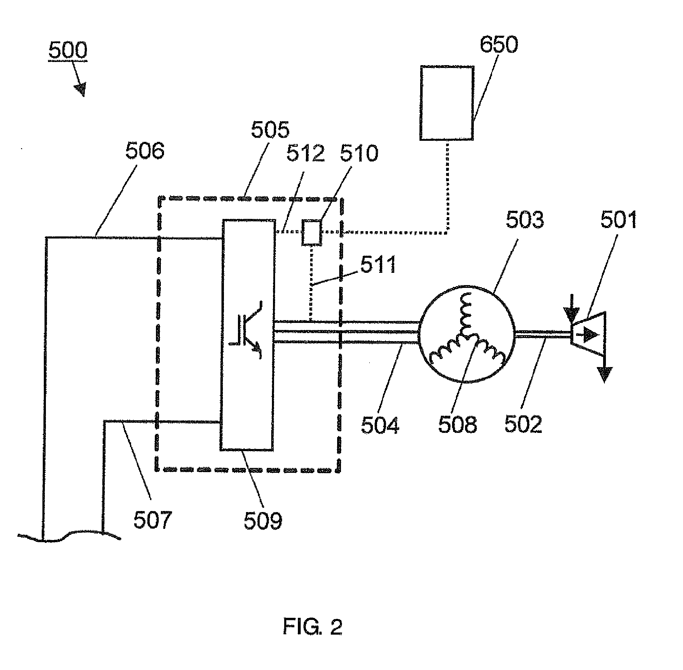

As illustrated in Fig. 2, which shows a detailed partial view, the mechanical power recovery device 500 further includes a shaft 502 for connecting the expander 501 and the generator 503, a three-phase power line 504 for connecting the generator 503 and the variable-speed converter 505, and a pair of DC power lines 506 and 507 connected to the variable-speed converter 505 and used for electric power regeneration. The expander 501 and the generator 503 rotate in synchronization with each other with the shaft 502. Normally, the speed (rotational frequency) of the expander 501 and the speed (rotational frequency) of the generator 503 are the same because no speed changing mechanism is provided. Hereinbelow, the DC power lines 506 and 507 are also referred to as "regenerative power lines".

Examples of the type of the expander 501 include positive displacement type expanders such as a scroll type expander in which two spiral blades rotate, a rotary type expander in which a piston is rotated in a cylinder, and a reciprocating type expander in which a piston is reciprocated in a cylinder. The generator 503 is, for example, a permanent magnet synchronous generator furnished with three-phase windings 508, and converts the mechanical power that is recovered by the expander 501 when the refrigerant expands, into electric power. The variable-speed converter 505 includes a switching device group 509. The switching device group 509 has the function as a converter unit that converts alternating current generated by the generator 503 into direct current. The variable-speed converter 505 is provided with a control unit 510. The control unit 510 has the function to acquire the value of electric current of the three-phase power line 504, which is the value of current flowing through the generator 503, via an electric current value measuring line 511, also the function to output a control signal to a control line 512 connected to the switching device group 509, and the function to control the driving of the generator 503. It should be noted that an induction generator may be used as the generator 503 in place of the permanent magnet synchronous generator.

As illustrated in Fig. 1, the compressor 602 is mechanically connected to a motor 605, and the motor 605 is electrically connected to a motor controller 606. The motor controller 606 is connected to main DC power lines 610 and 611, which extend from an AC power supply 607 via a rectifier circuit 608 and a smoothing capacitor 609. The main DC power lines 610 and 611 are also connected with the regenerative power lines 506 and 507. One end of each of the regenerative power lines 506 and 507 is connected to the variable-speed converter 505, and the other end thereof is connected to the main DC power lines 610 and 611. As with the variable-speed converter 505, the motor controller 606 is also communicatively connected to the main control unit 650.

The motor 605 drives the compressor 602. The motor controller 606 is an inverter that converts DC voltage into three-phase alternating voltage and controls the driving of the motor 605. The rectifier circuit 608 rectifies the AC voltage from the AC power supply 607 to DC voltage, and the smoothing capacitor 609 smoothes the DC voltage. Examples of the type of the compressor 602 include a scroll type, a rotary type, and a reciprocating type, as in the case of the expander 501.

The direct current recovered by the mechanical power recovery device 500 having the expander 501 is supplied through the regenerative power lines 506 and 507 to the main DC power lines 610 and 611, and is consumed by the motor 605 for driving the compressor 602.

As illustrated in Fig. 2, the mechanical power obtained when the refrigerant expands in the expander 501 is given to the generator 503 via the shaft 502 and is converted into AC power by the generator 503. The alternating current originating from the AC power is converted into direct current by the variable-speed converter 505, which is connected to the generator 503 by the three-phase power line 504. The variable-speed converter 505 allows the generator 503 to revolve at a given target speed by switching the switching device group 509 using a PWM (Pulse Width Modulation) technique. The function to control the speed of the generator 503 makes it possible to control the speed of the expander 501, which is connected to the generator 503 by the shaft 502. In other words, the switching control of the variable-speed converter 505 makes it possible to control the speed of the generator 503 and the expander 501 over a wide range. The expansion power from the expander 501 that is converted into direct current by the variable-speed converter 505 is used for driving the motor 605 (cf. Fig. 1).

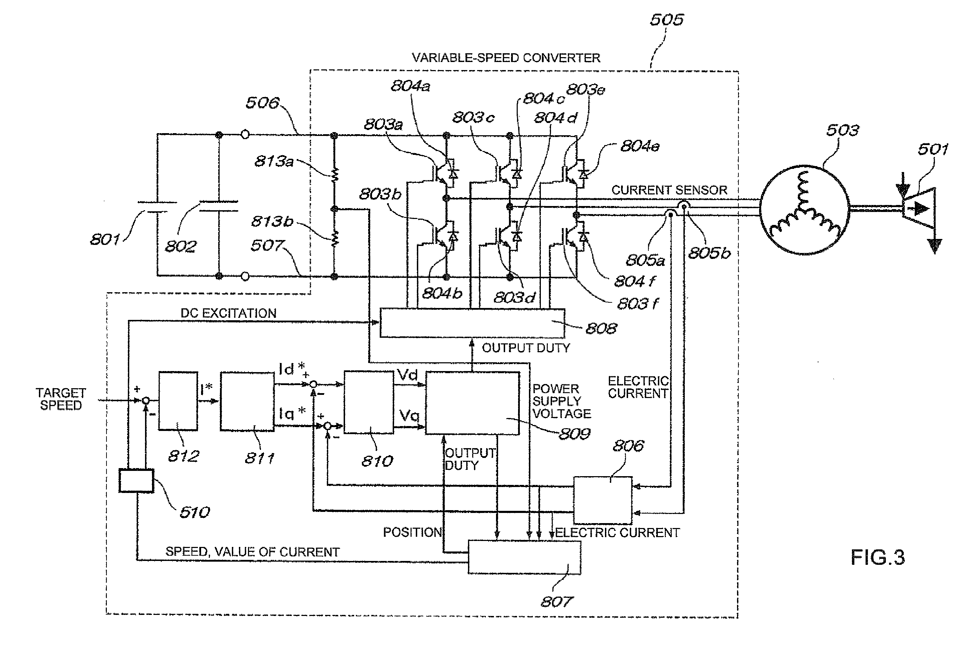

Fig. 3 is a detailed circuit diagram of the variable-speed converter. Voltage dividers 813a and 813b are provided between the pair of the regenerative power lines 506 and 507. The variable-speed converter 505 is furnished with: (a) two current sensors 805a and 805b; (b) a converter circuit composed of switching devices 803a, 803b, 803c, 803d, 803e, and 803f, each of which is a MOSFET (Metal Oxide Semiconductor Field Effect Transistor) or an IGBT (Insulated Gate Bipolar Transistor), and free wheel diodes 804a, 804b, 804c, 804d, 804e, and 804f, which are provided to form pairs with the switching devices; and (c) a control circuit containing a biaxial current converting means 806, a rotor-position and speed estimating means 807, the control unit 510, a base driver 808, a sine-wave-voltage outputting means 809, an electric-current controlling means 810, an electric-current-reference creating means 811, and a speed controlling means 812. The converter circuit (b) is a part that corresponds to the switching device group 509 shown in Fig. 2. The control circuit (c) can be constructed by a general-purpose microcomputer, which incorporates and executes a program for achieving the functions that the foregoing respective means should take on, an input/output circuit, and so forth. The foregoing respective means may be composed of logic circuits that are designed to be dedicated to achieving these functions.

The three-phase alternating current output of the generator 503 is supplied to, for example, a DC power supply 801 and a smoothing capacitor 802 via the variable-speed converter 505. The DC power supply 801 corresponds to the main DC power lines 611 and 610 shown in Fig. 1. The three-phase alternating current output is further converted into direct current by the variable-speed converter 505. At that time, the variable-speed converter 505 performs a control process based on the information of a target speed supplied from outside (the main control unit 650 of the heat pump apparatus 600 in the present embodiment) so that the speed of the generator 503 will reach the target speed.

Specifically, a switching pattern of the switching devices 803a to 803f of the variable-speed converter 505 is determined based on the information about the speed of the generator 503, the information about the target speed supplied from outside, and the magnetic pole position information of the generator 503 that is estimated from the electric current information of the generator 503, which is obtained from the current sensors 805a and 805b. This switching pattern signal is converted by the base driver 808 into drive signals for electrically driving the switching devices 803a to 803f, and according to the drive signals, the switching devices 803a to 803f are operated.

Next, the behavior of the variable-speed converter 505 will be described. It should be noted that the behavior of the inverter 506 is generally common to the behavior of the variable-speed converter 505, and therefore the behavior of the inverter 506 will not be elaborated upon in the present specification.

First, in order to attain a target speed $\omega^*$ given from outside, an electric current reference $I^*$ is computed by the speed controlling means 812 based on the deviation from the actual speed $\omega$ according to the following (Eq. 1). The computing is carried out according to the common PI control technique.

$$[\text{Eq. 1}]$$
$$I^* = G_{p\omega} \times (\omega^* - \omega) + G_{i\omega} \times \Sigma(\omega^* - \omega)$$

In the equation, $G_{p\omega}$ and $G_{i\omega}$ are speed-control proportional gain and speed-control integral gain, respectively, $\omega$ is actual speed, $\omega^*$ is target speed, and $I^*$ is electric current reference.

Next, using the computed electric current reference $I^*$, the electric current reference creating means 811 computes d-axis current reference $I_d^*$ and q-axis current reference $I_q^*$ according to the following (Eq. 2) and (Eq. 3).

[Eq. 2]
$$I_d{}^* = I^* \times \sin(\beta)$$

[Eq. 3]
$$I_q{}^* = I^* \times \cos(\beta)$$

In the equations, $\beta$ represents current phase angle.

Meanwhile, the biaxial current converting means 806 converts phase currents $I_u$ and $I_v$ of the generator 503, which have been detected by the current sensors 805a and 805b, into biaxial currents, q-axis current $I_q$ that contributes to the magnet torque of the generator 503 and d-axis current $I_d$ that is orthogonal to the q-axis current $I_q$, according to the following (Eq. 4).

[Eq. 4]

$$I_a = \sqrt{\frac{3}{2}} \times I_u$$

$$I_b = \sqrt{\frac{1}{2}} \times (I_u + 2 \times I_v)$$

$$\begin{bmatrix} I_d \\ I_q \end{bmatrix} = \begin{bmatrix} \cos(\theta) & \sin(\theta) \\ -\sin(\theta) & \cos(\theta) \end{bmatrix} \begin{bmatrix} I_a \\ I_b \end{bmatrix}$$

Here, $\theta$ represents rotor position (magnetic pole position of the generator).

Then, using the electric current references $I_d{}^*$ and $I_q{}^*$ as well as the electric current values $I_d$ and $I_q$, the electric current controlling means 810 executes a control operation according to the following (Eq. 5) and (Eq. 6) so as to accomplish the electric current references, and thus obtains output voltages $V_d$ and Vq.

[Eq. 5]
$$V_d = G_{pd} \times (I_d{}^* - I_d) + G_{id} \times \Sigma(I_d{}^* - I_d)$$

[Eq. 6]
$$V_q = G_{pq} \times (I_q{}^* - I_q) + G_{iq} \times \Sigma(I_q{}^* - I_q)$$

Here, $V_d$ and $V_q$ are d-axis voltage and q-axis voltage, respectively, $G_{pd}$ and $G_{id}$ are d-axis current control proportional gain and d-axis integral gain, respectively, and $G_{pq}$ and $G_{iq}$ are q-axis current control proportional gain and q-axis integral gain, respectively.

Next, from the output voltages $V_d$ and Vq thus obtained, three-phase output voltages $V_u$, $V_v$, and $V_w$ are obtained using the rotor position $\theta$ by a common two-phase/three-phase conversion as represented by the following (Eq. 7) so that the output waveform will be a sine wave.

[Eq. 7]

$$\begin{bmatrix} V_a \\ V_b \end{bmatrix} = \begin{bmatrix} \cos(\theta) & -\sin(\theta) \\ \sin(\theta) & \cos(\theta) \end{bmatrix} \begin{bmatrix} V_d \\ V_q \end{bmatrix}$$

$$\begin{bmatrix} V_u \\ V_v \\ V_w \end{bmatrix} = \begin{bmatrix} \sqrt{2/3} & 0 \\ -\sqrt{1/6} & \sqrt{1/2} \\ -\sqrt{1/6} & -\sqrt{1/2} \end{bmatrix} \begin{bmatrix} V_a \\ V_b \end{bmatrix}$$

Here, $V_u$, $V_v$, and $V_w$ represent U-phase voltage, V-phase voltage, and W-phase voltage, respectively, and $\theta$ represents rotor position.

Further, the sine-wave-voltage outputting means 809 outputs a drive signal for driving the generator 503 to the base driver 808, based on the output voltages $V_d$, $V_q$ and the information about the rotor position $\theta$ that is estimated by the rotor-position and speed estimating means 807. The base driver 808 outputs a signal (PWM signal) for driving the switching devices 803a to 803f according to the drive signal. Thus, the generator 503 is driven at the target speed (target speed).

Next, the following describes the behavior of the heat pump apparatus 600 when stopping its operation.

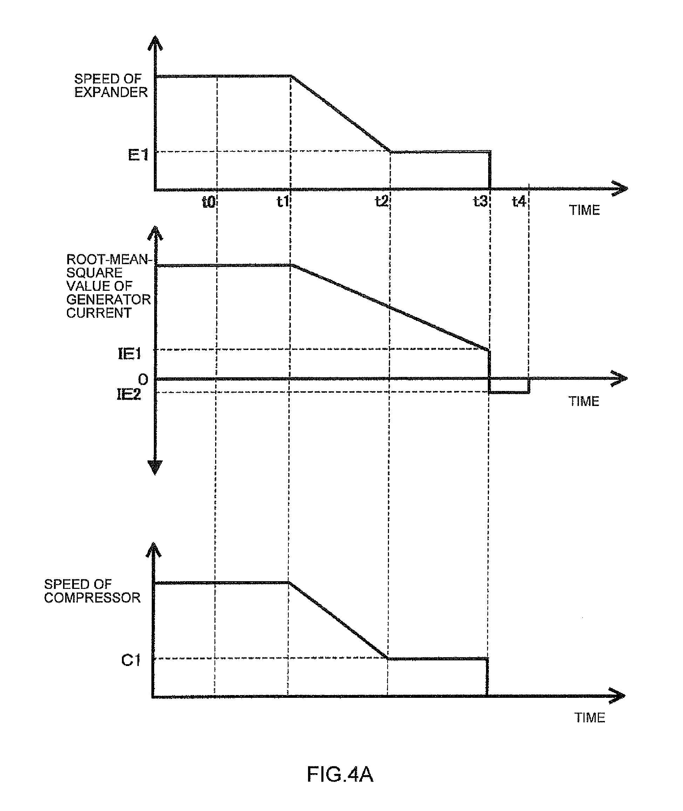

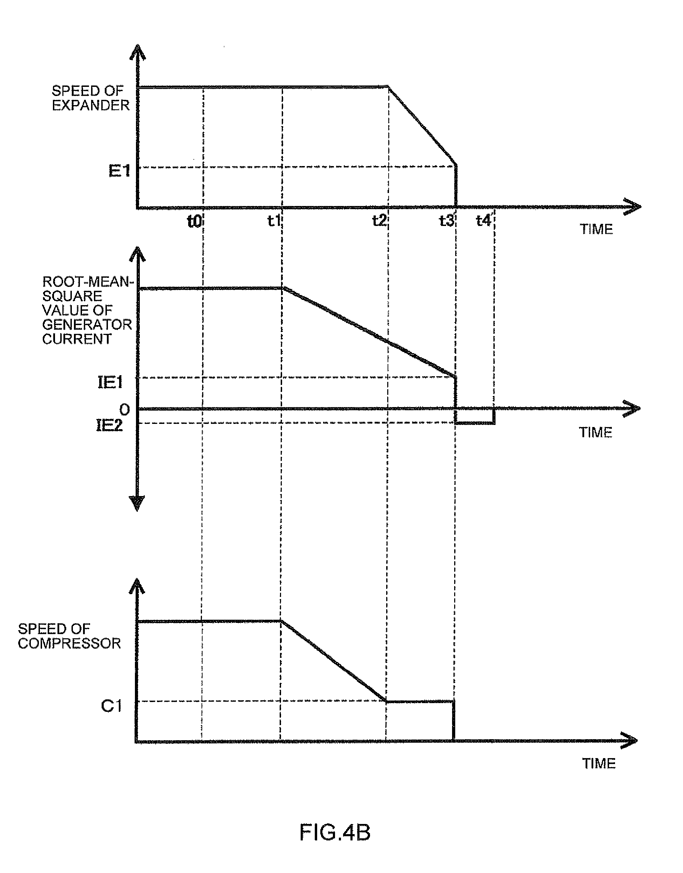

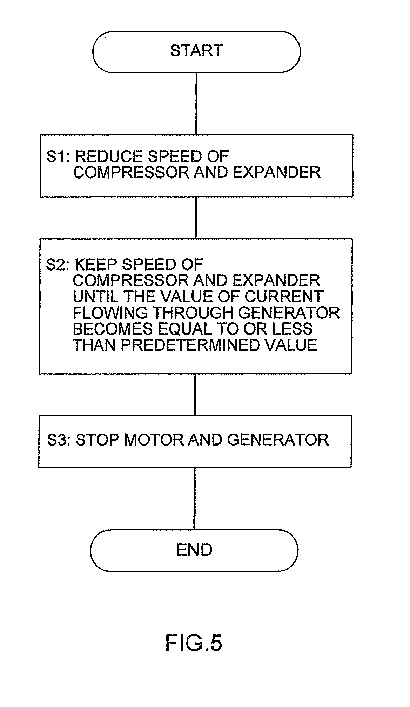

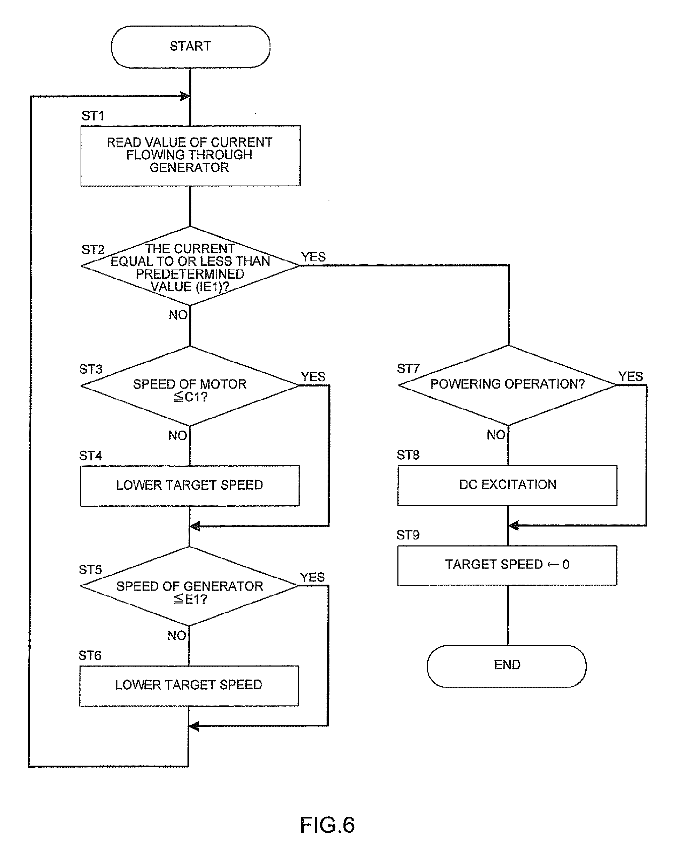

Figs. 4A and 4B are transition diagrams illustrating speed of the expander 501, electric current (root-mean-square value) flowing through the generator 503, and speed of the compressor 602 when the heat pump apparatus 600 stops the operation. Fig. 5 is a general flowchart illustrating a stopping procedure of the heat pump apparatus. Fig. 6 is a flowchart illustrating the control process executed by the main control unit 650 when the heat pump apparatus 600 stops the operation.

The operation stopping sequence shown in Fig. 5 is started in response to the occurrence of a predetermined operation stop trigger. In the case that the heat pump apparatus 600 is applied to an air conditioner, examples of the operation stop trigger may include turning off of the operation switch by the user, the elapse of a predetermined time counted by an automatic shut-off timer, and a room temperature that has reached a target value. In the case that the heat pump apparatus 600 is applied to a water heater, examples of the operation stop trigger include an amount of the stored hot water or a temperature of the stored hot water that has reached a target value.

Step S1 shown in Fig. 5 corresponds to t1-t2 in Fig. 4A, step S2 corresponds to t2-t3, and step S3 corresponds to t3-t4. Step S1 is a step for lowering the target speed of the motor 605 and the generator 503 to lower the speed of the compressor 602 and the expander 501. Thereby, the high pressure/low pressure difference of the refrigerant is reduced. Step S2 is for retaining the speed of the compressor 602 and the expander 501 until the value of current flowing through the generator 503 becomes a predetermined value. However, if step S1 is executed for a sufficiently long time, in other words, if the speed of the compressor 602 and the expander 501 are gradually lowered, the pressure difference of the refrigerant accordingly reduces sufficiently, and the value of current flowing through the generator 503 lowers also; therefore, if that is the case, step S2 is not necessarily required. Lastly, in step S3, the working of the motor 605 and the generator 503 are stopped.

Thus, in response to the occurrence of the operation stop trigger, an inverter 606 lowers the speed of the motor 605. After the operation stop trigger occurs, the variable-speed converter 505 continues to control the driving (to control the speed) of the generator 503 at least until the electric current flowing through the generator 503 becomes equal to or less than a predetermined value, and on the condition that the value of current flowing through the generator 503 becomes equal to or less than the predetermined value, it stops the working of the generator 503. This prevents the expander 501 from rotating at a high speed due to the remaining pressure difference of the refrigerant.

Further details are given with reference to the flowchart of Fig. 6. After acquiring the operation stop trigger, the main control unit 650 of the heat pump apparatus 600 calls and executes the program shown in the flowchart of Fig. 6.

First, in step ST1, the main control unit 650 reads the value of current flowing through the generator 503. The value of current through the generator 503 may be acquired from the control unit 510 of the variable-speed converter 505 or may be acquired directly from the current sensors 805a and 805b (cf. Fig. 3).

Next, in step ST2, it is assessed whether or not the electric current value that has been read is equal to or less than a predetermined value (IE1) (electric current value determining means (A)). Since this predetermined value (IEl) is set at a sufficiently small value, the value of current flowing through the generator 503 is usually greater than the predetermined value (IE1) immediately after the start of the operation stopping sequence. Next, in step ST3, it is assessed whether or not the speed of the motor 605 is equal to or less than a predetermined speed (C1). If the speed of the motor 605 is greater than the predetermined speed (C1), the process proceeds to step ST4, in which the target speed of the motor 605 is lowered. The speed of the motor 605 can be identified from the target speed of the motor that is stored in the main control unit 650 at all times. The newly set target speed is supplied from the main control unit 650 to the inverter 606. It should be noted that the rate of lowering of the speed is not particularly limited, so it may be lowered gradually in a stepwise manner to the predetermined speed (C1) or may be abruptly lowered to the predetermined speed (C1) in one step, although the former is assumed in the present embodiment.

More specifically, the inverter 606 lowers the speed of the motor 605 in response to the occurrence of an operation stop trigger so that a high pressure/low pressure difference of the refrigerant reduces, and it continues to control the driving of the motor 605 in order to consume regenerative power until the value of current flowing through the generator 503 becomes equal to or less than the predetermined value (IE1). If the motor 605 is stopped immediately after the operation stop trigger occurs, the electric power generated by the generator 503 will not be consumed and consequently the electric circuits may be destructed. According to the present embodiment, however, the regenerative power can be consumed reliably because the controlling of driving of the motor 605 is also continued, so the destruction of the electric circuits can be prevented reliably. Moreover, in the present embodiment, as will be seen from Fig. 4A, the speed of the motor 605 and the speed of the generator 503 are lowered in synchronization with each other, and they are monotonously decreased at a constant rate. In particular, gradually lowering the speed of the motor 605 is preferable because it eliminates the possibility that the motor 605 may perform a regeneration operation.

Next, in step ST5, it is assessed whether or not the speed of the generator 503 is equal to or less than a predetermined speed (E1). If the speed of the generator 503 is greater than the predetermined speed (E1), the process proceeds to step ST6, in which the target speed of the generator 503 is lowered. The newly set target speed is supplied to the variable-speed converter 505. As a consequence, the generator 503 is driven at a lower speed. The predetermined speed (E1) of the generator 503 and the predetermined speed (C1) of the motor 605 may be set at a low speed, for example, at 15 rps. to 20 rps., although they may depend on the volumes of the expander 501 and the compressor 602. It should be noted here that in the present embodiment, the speed of the generator 503 always matches that of the expander 501, and likewise, the speed of the motor 605 always matches that of the compressor 602.

Steps ST1 to ST6 in the flowchart of Fig. 6 correspond to t1 to t3 in the transition diagram of Fig. 4A. As shown in Fig. 4A, when the main control unit 650 starts the operation stopping sequence at time t1, the variable-speed converter 505 receives a lower target speed $\omega^*$ of the generator 503 and accordingly lowers the speed of the expander 501. Subsequently, when the speed reaches E1 at time t2, the expander 501 is kept at the speed E1 by the variable-speed converter 505. The expander 501 is kept at the speed E1 in this way in order to wait until the pressure difference in the expander 501 reduces sufficiently to prevent the expander 501 from revolving at a high speed due to the pressure difference. Of course, as already mentioned above, when the rate of lowering of the speed is sufficiently small, the step of keeping the speed is not necessarily required.

Further, the variable-speed converter 505 continues to control the driving of the generator 503 until the value of current flowing through the generator 503 becomes equal to or less than the predetermined value (IE1) so as to attain a lower speed than that at the time when the operation stop trigger has occurred. In the present embodiment, as illustrated in the transition diagram of Fig. 4A, the speed of the motor 605 and that of the generator 503 are synchronized with each other and decreased monotonously from the time at which the operation stop trigger occurs. This is advantageous to reduce the noise during stopping the operation.

It should be noted, however, that it is not necessary to reduce the speed of the generator 503 immediately after the operation stop trigger occurs, and the lowering of the speed does not need to start at the same time for both the motor 605 and the generator 503. For example, as illustrated in the transition diagram of Fig. 4B, immediately after the operation stop trigger occurs, the variable-speed converter 505 continues to control the driving of the generator 503 so as to attain the speed at the time when the operation stop trigger occurs (time t1). The decelerating of the motor 605 is necessary in order to reduce the high pressure/low pressure difference of the refrigerant. After the high pressure/low pressure difference of the refrigerant has reduced to an appropriate level, the speed of the generator 503 is gradually lowered. This makes it possible to more quickly reduce the high pressure/low pressure difference of the refrigerant and is therefore advantageous in shortening the time required for completely stopping the operation. The timing for starting to lower the speed of the generator 503 or the rate of the lowering are not particularly limited, but they should be adjusted so as to avoid increasing the level of the noise or causing undue stress to the mechanical components.

As seen in step ST2 shown in the flowchart of Fig. 6, the heat pump apparatus 600 is furnished with the means (A) for determining whether or not the value of current flowing through the generator 503 is equal to or less than the predetermined value (IE1) in response to the occurrence of an operation stop trigger. Of course, the means (A) may be included in the variable-speed converter 505. The variable-speed converter 505 continues to control the driving of the generator 503 until the value of current flowing through the generator 503 becomes equal to or less than the predetermined value (IE1) if the value of current flowing through the generator 503 exceeds the predetermined value (IEI), and further, it stops the working of the generator 503 if the value of current flowing through the generator 503 becomes equal to or less than the predetermined value (IE1). Thus, performing the controlling of the generator 503 while monitoring the electric current value makes it possible to accurately identify the timing at which the value of current flowing through the generator 503 reaches the predetermined value (IEI) and therefore serves to quickly stop the operation of the heat pump apparatus 600.

Referring back to the flowchart of Fig. 6, the description will proceed further. When the speed of the motor 605 and the generator 503 are lowered and the value of current flowing through the generator 503 is reduced to a level equal to or less than the predetermined value (IE1), it is assessed in step ST7 whether or not the generator 503 is performing a powering operation. If the generator 503 is in the powering operation, the target speed is set to be zero in step ST9. That is, the inverter 606 is supplied with an instruction for immediately stopping the working of the motor 605 and the variable-speed converter 505 is supplied with an instruction for immediately stopping the working of the generator 503.

There may be a very rare case in which the generator 503 is operated temporarily in a powering operation, in other words, driven as a motor. For example, when the high pressure/low pressure difference of the refrigerant is small immediately after starting the operation of the heat pump apparatus 600, the generator 503 may temporarily be operated in a powering operation. If an operation stop trigger occurs in this situation, the controlling of the speed of the motor 605 and the generator 503 may be stopped immediately. Even if the expander 501 is permitted to freely rotate, it will not revolve at a high speed such as to cause destruction of the components. Rather, by immediately stopping the motor 605, unnecessary electric power consumption can be avoided.

On the other hand, if the value of current flowing through the generator 503 is equal to or less than the predetermined value (IE1) and the generator 503 is not in a powering operation, a DC excitation to the phase windings 508 of the generator 503 is performed in step ST8, and the rotation of the generator 503 is stopped. The target speed is set to be zero for both the motor 605 and the generator 503 (ST9). The control unit 510 of the variable-speed converter 505 gives an instruction to the base driver 808 such that switching will be effected in the DC excitation pattern. Thereby, the field is fixed in the generator 503, and a brake force according to the magnetic force is applied to the generator 503.

As illustrated in Fig. 4A, the current flowing through the generator 503 flows corresponding to the pressure difference of the refrigerant in the expander 501, so the electric current value gradually decreases from time t1. When the current reaches the predetermined value (IE1) at time t3, the DC excitation is performed for the phase windings 508 of the generator 503 by the control unit 510 of the variable-speed converter 505. That is, a brake is applied to the generator 503 by passing a direct current (IE2) therethrough until time t4, whereby the rotation of the expander 501 is stopped.

The predetermined value (IE1) can be a value determined such that the electric current flowing through the generator 503 will not exceed the capacity of the switching device group 509 of the variable-speed converter 505 when a DC excitation is performed for the phase windings 508 of the generator 503, in other words, it can be an electric current value that guarantees the switching devices not to be destructed. In addition, the predetermined value (TEI) may be a value of current flowing through the generator 503 when the pressure difference in the expander 501 has become sufficiently small, and it may be, for example, about 10 amperes, at which the speed of the expander 501 does not increase again with the pressure difference at the time when the rotation of the expander 501 is stopped by the DC excitation. In other words, the predetermined value (IE1) can be a value that is determined so that the speed of the generator 503 can reduce when the DC excitation is performed for the phase windings 508. The electric current value (IE2) when the DC excitation is conducted is not particularly limited, and it may be set at a value equal to, or slightly greater or less than, the predetermined value (IE1).

Moreover, it is preferable that the generator 503 be a permanent magnet synchronous generator, which is highly efficient. In this case, the predetermined value (IE1) can be a value that is determined to be such that the electric current flowing though the permanent magnet synchronous generator does not exceed the demagnetization current of the permanent magnet synchronous generator when the DC excitation is performed for the phase windings 508.

Determining the predetermined value (IE1) as described above makes it possible to stop the generator 503 and consequently stop the expander 501 reliably without destructing the switching devices or demagnetizing the magnets used in the generator 503. Of course, the DC excitation is not necessarily required for the present invention, but when the apparatus needs to be stopped quickly, it is preferable that the DC excitation be performed.

It should be noted that, in the present embodiment, the value of current flowing through the generator 503 is successively monitored to adjust the stop timing, but the monitoring of the electric current value is not necessarily required from the viewpoint, according to the invention, that the apparatus should be stopped after the high pressure/low pressure difference of the refrigerant has reduced sufficiently. Specifically, it is possible to execute a predetermined operation stopping sequence without monitoring the electric current value successively, for example, an operation stopping sequence specified by the transition diagrams of Figs. 4A and 4B of the present embodiment.

Furthermore, as will be discussed below, because it is possible to estimate the pressure difference between the high-pressure refrigerant and the low-pressure refrigerant in the rotary type expander 501 from the value of current flowing through the generator 503, the stop timing may be adjusted by monitoring the pressure of the refrigerant, instead of monitoring the electric current value. For example, adjusting the stop timing based on the refrigerant pressure measured with a pressure sensor yields exactly the same result as that attained by the present embodiment, which adjusts the stop timing by monitoring the value of current flowing through the generator 503. It should be noted, however, that pressure sensors are generally costly, so the technique that uses the electric current value as in the present embodiment is preferable.

Expander torque $T_{exp}$, applied to the expander 501, can be expressed as follows, with current $I_{exp}$ flowing through the generator 503 and generator torque constant $K_t$ inherent to the generator 503.

$$[Eq.\ 8]$$
$$T_{exp} = K_t \times I_{exp}$$

In addition, the following (Eq. 9) holds where the pressure of the high-pressure refrigerant taken into the expander 501 is $P_d$, the pressure of the low-pressure refrigerant discharged therefrom is $P_s$, the designed intake volume of the expander 501 is $V_{exp}$, the thermal insulation coefficient is k, and the speed of the expander 501 is f.

$$[Eq.\ 9]$$
$$T_{exp} = k/(k - 1) \times P_s \times V_{exp} \times \{(P_d/P_s)^{(k - 1)/k} - 1\}/2\pi f$$

From (Eq. 8) and (Eq. 9), the pressure difference between the high-pressure refrigerant and the low-pressure refrigerant in the rotary type the expander 501 can be estimated.

According to the present embodiment, the rotation of the expander 501 is stopped based on the value of current flowing through the generator 503, which relates to the pressure difference of the refrigerant in the expander 501. This can prevent the speed of the expander 501 from increasing excessively due to the remaining pressure difference of the refrigerant. Moreover, since a brake is applied to the expander 501 when stopping the operation, the expander 501 can be stopped quickly. Furthermore, the variable-speed converter 505 continues to control the driving of the motor 605 even after the operation stop trigger occurs, so no electrical components will suffer from destruction. Thus, the present embodiment can provide a highly reliable heat pump apparatus using an expander.

When the inverter 606 stops controlling of the speed of the motor 605, the speed of the compressor 602 rapidly drops to zero. It is important to gradually lower the speed of the motor 605 as in the present embodiment (preferably in synchronization with the generator 503) from the viewpoint of ensuring where the regenerative power is consumed. However, it is possible to finish controlling the speed of the motor 605 before the value of current flowing through the generator 503 becomes equal to or less than a predetermined value and to stop the compressor 602 if the regenerative power can be consumed even without using the motor 605.

For example, it is possible to provide a protection circuit as illustrated in the second embodiment, which will be discussed below, specifically, a protection circuit that can consume the regenerative power of the generator 503 in place of the motor 605.

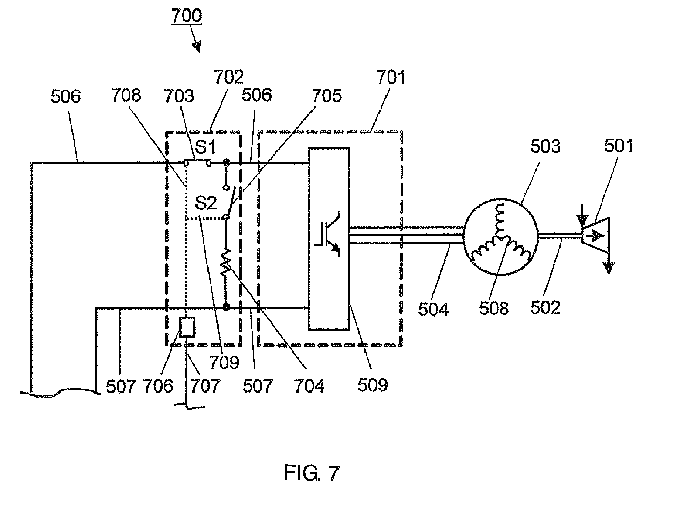

As will be explained in Embodiment 2 (cf Fig. 7), such a protection circuit may include a first switch provided on the DC power line 506 connected to the variable-speed converter 505, a second switch connected to the DC power lines 506 and 507 between the first switch and the variable-speed converter 505 and in parallel with the variable-speed converter 505, and a load or an electricity storage unit connected to the DC power lines 506 and 507 in series with the second switch. During the normal operation, the first switch is on while the second switch is off. By turning the first switch off and the second switch on in response to the occurrence of an operation stop trigger, the regenerative power is consumed by the load or is stored in the electricity storage unit. As will be explained in Embodiment 2, it is preferable to turn the first switch off and turn the second switch on also in the event of power failure or abnormal shutdown of the power supply.

It should be noted that although the heat pump apparatus 600 according to the present embodiment has been described to have three separate control units, namely, the main control unit 650, the control unit 510 for the variable-speed converter 505, and a control unit (not shown) for the inverter 606, it is also possible to put the functions of all the control units into one control unit.

(Embodiment 2)

Fig. 7 is a detailed view of a portion of a heat pump apparatus using an expander according to Embodiment 2 of the present invention, illustrating its expander side. In Embodiment 2 of the present invention, the components that serve the same functions as those in Embodiment 1 are denoted by same reference numerals, and the descriptions of their operations will be omitted.

A heat pump apparatus 700 is furnished with an expander 501, a generator 503 connected to the expander 501 by a shaft 502, a variable-speed converter 701 connected to the generator 503 by a three-phase power line 504, and an expander protection circuit 702 connected to the variable-speed converter 701 by a pair of DC power lines 506 and 507. The pair of DC power lines 506 and 507 extends from the expander protection circuit 702.

The variable-speed converter 701 has a switching device group 509. The switching device group 509 converts alternating current generated by the generator 503 into direct current. The expander protection circuit 702 is furnished with a first relay 703 provided on the DC power line 506, and with a load resistance element 704 and a second relay 705, which are connected in series between the pair of DC power lines 506 and 507 extending from the first relay 703 toward the variable-speed converter 701. Furthermore, the expander protection circuit 702 has a relay controlling unit 706 for controlling opening/closing of the first relay 703 and the second relay 705 in response to a control current (control signal) that flows while the expander 501 is being driven. The relay controlling unit 706 has the function to control the first relay 703 and the second relay 705 with respective relay control signal lines 708 and 709, for example, by receiving an input signal via a control current line 707 that passes the direct current obtained by converting the alternating current from an AC power supply.

During the normal operation of the heat pump apparatus 700, the variable-speed converter 701 controls the first relay 703 and the second relay 705 so that the relay controlling unit 706 closes the first relay 703 and opens the second relay 705. Consequently, the direct current converted by the variable-speed converter 701 is passed through the pair of DC power lines 506 and 507. On the other hand, when the supply of the control current via the control current line 707 stops because of power failure or the like, the variable-speed converter 701 controls the first relay 703 and the second relay 705 so that the relay controlling unit 706 opens the first relay 703 and closes the second relay 705, and thus, the direct current converted by the variable-speed converter 701 is consumed by the load resistance element 704.

Therefore, even if direct current is generated due to the pressure difference of the refrigerant remaining in the expander 501 when the operation of the apparatus abnormally stops because of power failure or the like, the direct current is consumed by the load resistance element 704, and the electric circuits are prevented from being destructed.

In addition, although this Embodiment 2 has illustrated an example in which the direct current converted by the variable-speed converter 701 is consumed by the load resistance element 704, it is also possible to provide an electricity storage unit such as a capacitor in place of the load resistance element 704 to store the electricity.

Furthermore, although Fig. 7 illustrates an example in which the first relay 703 is provided on the DC power line 506, it is possible to provide the first relay 703 on the DC power line 507. Moreover, non-contact type switches such as transistors may be employed in places of the relays 703 and 705.

The heat pump apparatus according to the present invention is a highly reliable apparatus capable of preventing the expander from the damages originating from high-speed revolutions and free from destruction of the electric circuits when stopping the operation. Therefore, the invention is useful for such apparatus as air conditioners and water heaters containing this apparatus. Furthermore, the mechanical power recovery device contained in the heat pump apparatus of the present invention is also applicable to other heat pump cycles such as Rankine cycle, as a device for recovering the energy of expansion of working fluid.

**Claims**

1.   A heat pump apparatus, comprising:

   a compressor for compressing a working fluid;
   a motor for driving the compressor;
   an expander for expanding the working fluid;
   a generator connected to the expander, for converting mechanical power into electric power, the mechanical power being recovered by the expander when the working fluid expands; and
   a variable-speed converter connected to the generator, for converting alternating current generated by the generator into direct current, wherein the variable-speed converter continues to control driving of the generator after an operation stop trigger occurs for lowering rotational speed of the motor and stopping the operation of the heat pump apparatus at least until a value of current flowing through the generator becomes equal to or less than a predetermined value, and stops the working of the generator after the value of current flowing through the generator becomes equal to or less than the predetermined value.

2.   The heat pump apparatus according to claim 1, wherein after the operation stop trigger occurs, the variable-speed converter continues to control the driving of the generator until the value of current flowing through the generator becomes equal to or less than the predetermined value in such a manner that the generator is driven at a speed that is equal to or less than the speed at the time when the operation stop trigger has occurred.

**3.** The heat pump apparatus according to claim 1, further comprising:

means (A) for determining whether or not the value of current flowing through the generator is equal to or less than the predetermined value in response to the occurrence of the operation stop trigger, or wherein the variable-speed converter comprises the means (A), and
the variable-speed converter continues to control the driving of the generator until the value of current flowing through the generator becomes equal to or less than the predetermined value if the value of current flowing through the generator exceeds the predetermined value, and the variable-speed converter stops the working of the generator if the value of current flowing through the generator becomes equal to or less than the predetermined value.

**4.** The heat pump apparatus according to claim 3, wherein;

the means (A) further assesses whether or not the generator is performing a powering operation; and
if the generator is performing the powering operation, the variable-speed converter immediately finishes controlling the driving of the generator.

**5.** The heat pump apparatus according to claim 1, wherein the variable-speed converter is connected to the generator by a three-phase power line, and the variable-speed converter performs a DC excitation for phase windings of the generator when stopping the working of the generator.

**6.** The heat pump apparatus according to claim 5, wherein the predetermined value is determined so that the electric current flowing through the generator does not exceed a capacity of the variable-speed converter when the DC excitation is performed for the phase windings.

**7.** The heat pump apparatus according to claim 5, wherein the predetermined value is determined according to the state in which the speed of the generator reduces when the DC excitation is performed for the phase windings.

**8.** The heat pump apparatus according to claim 5, wherein:

the generator is a permanent magnet synchronous generator; and
the predetermined value is determined so that electric current flowing through the permanent magnet synchronous generator does not exceed a demagnetization current of the permanent magnet synchronous generator when the DC excitation is performed for the phase windings.

**9.** The heat pump apparatus according to claim 1, further comprising:

an inverter connected to the motor, for converting direct current into alternating current and for controlling the driving of the motor, wherein
the inverter lowers the speed of the motor in response to the occurrence of the operation stop trigger so as to reduce a high pressure/low pressure difference of the working fluid, and continues to control the driving of the motor to consume regenerative power until the electric current flowing through the generator becomes equal to or less than the predetermined value.

**10.** The heat pump apparatus according to claim 1, further comprising:

a protection circuit connected to the variable-speed converter, for consuming or storing regenerative power generated by the generator in place of the motor.

**11.** The heat pump apparatus according to claim 10, wherein:

the protection circuit comprises a first switch provided on a DC power line connected to the variable-speed converter, a second switch connected to the DC power line between the first switch and the variable-speed converter and in parallel to the variable-speed converter, and a load or an electricity storage unit connected to the DC power line in series with the second switch; and
by turning the first switch off and turning the second switch on, the regenerative power is consumed by the load or the regenerative power is stored in the electricity storage unit.

**12.** A heat pump apparatus, comprising:

an expander for expanding a working fluid;
a generator connected to the expander, for converting mechanical power into electric power, the mechanical power being recovered by the expander when the working fluid expands;
a variable-speed converter connected to the generator, for converting alternating current generated by the generator into direct current; and
a protection circuit connected to the variable-speed converter, wherein the protection circuit is supplied with a control signal while the expander is being driven, and consumes or stores regenerative power generated by the generator when the supply of the control signal stops.

**13.** The heat pump apparatus according to claim 12, wherein:

the protection circuit comprises a first switch provided on a DC power line connected to the variable-speed converter, a second switch connected to the DC power line between the first switch and the variable-speed converter and in parallel to the variable-speed converter, and a load or an electricity storage unit connected to the DC power line in series with the second switch; and
if the supply of the control signal stops, the first switch is turned off and the second switch is turned on.

FIG. 1

FIG. 2

FIG.3

VARIABLE-SPEED CONVERTER

FIG.4A

FIG.4B

START

S1: REDUCE SPEED OF
COMPRESSOR AND EXPANDER

S2: KEEP SPEED OF
COMPRESSOR AND EXPANDER
UNTIL THE VALUE OF CURRENT
FLOWING THROUGH GENERATOR
BECOMES EQUAL TO OR LESS
THAN PREDETERMINED VALUE

S3: STOP MOTOR AND GENERATOR

END

FIG.5

FIG.6

20

FIG. 7

FIG. 8

## INTERNATIONAL SEARCH REPORT

| | International application No. |
|---|---|
| | PCT/JP2006/320864 |

A. CLASSIFICATION OF SUBJECT MATTER
*H02P9/04*(2006.01)i, *F25B11/02*(2006.01)i, *H02P9/10*(2006.01)i

According to International Patent Classification (IPC) or to both national classification and IPC

B. FIELDS SEARCHED

Minimum documentation searched (classification system followed by classification symbols)
H02P9/04, F25B11/02, H02P9/10

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 61-29647 A (Toshiba Corp.), 10 February, 1986 (10.02.86), All pages (Family: none) | 1-13 |
| Y | US 2005/0217288 A1 (Keiichi Uno, Hironori Asa, Atsushi Inaba, Takashi Yamanaka, Hideji Yoshida, Hiroshi Ogawa), 06 October, 2005 (06.10.05), All pages & JP 2005-313878 A        & DE 102005014129 A1 | 1-13 |
| Y | JP 2002-374689 A (Mitsubishi Electric Corp., Nihon Kentetsu Co., Ltd.), 26 December, 2002 (26.12.02), Par. Nos. [0010], [0080] (Family: none) | 5-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 January, 2007 (10.01.07) | 16 January, 2007 (16.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 950 881 A1**

**INTERNATIONAL SEARCH REPORT**

| International application No. |
| --- |
| PCT/JP2006/320864 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 11-262283 A  (Yaskawa Electric Corp.),<br>24 September, 1999 (24.09.99),<br>Par. Nos. [0005] to [0007]; Fig. 1<br>(Family: none) | 11-13 |

Form PCT/ISA/210 (continuation of second sheet) (April 2005)

24

**EP 1 950 881 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9158851 A